# EUROPEAN PATENT SPECIFICATION

(11) **EP 4 016 456 B1**
(45) Date of publication and mention of the grant of the patent: **15.10.2025**
(21) Application number: 20215720.2
(22) Date of filing: 18.12.2020
(51) Int. Cl.: G06T 7/246, G06T 7/73

(54) **METHOD AND SYSTEM FOR DETERMINING A THREE DIMENSIONAL POSITION**
VERFAHREN UND SYSTEM ZUR BESTIMMUNG EINER DREIDIMENSIONALEN POSITION
PROCÉDÉ ET SYSTÈME POUR DÉTERMINER UNE POSITION TRIDIMENSIONNELLE

(43) Date of publication of application: 22.06.2022
(73) Proprietor: Augmented Robotics GmbH, 10625 Berlin (DE)
(72) Inventor: NITSCHKE, Tony, 13627 Berlin (DE); MELAN, Evgeni, 10627 Berlin (DE); BETHKE, Patrick Finn Albrecht, 12247 Berlin (DE)
(74) Representative: Vossius & Partner Patentanwälte Rechtsanwälte mbB

(56) References cited:
- CN-A- 112 017 236
- US-A1- 2018 260 613
- US-A1- 2019 147 600
- US-B1- 10 002 442

## Description

The invention relates to a method and system for determining a three dimensional position. In particular, the invention relates to a method and system for determining a three dimensional, 3D, position of an object in a space in relation to an optical sensor based on an image captured with the optical senor.

The determination of a 3D position of an object in a space is a frequently occurring problem in different fields of technology. Different solutions have been found. The solutions are based on different sensor technologies and physical effects. Some solutions even combine different sensors and physical effects. Depending on the technical problem, different parameters of the positioning are relevant. Typical relevant parameters are precision, accuracy, speed, and cost.

US 2019/147600 A1 relates to an object position and/or orientation being determined based on image data and object contact points. Image data is captured representing an object, such as a vehicle. Vehicle contact points are identified in the image data representing wheel contacts with the ground. For an individual vehicle contact point (e.g., a left-front wheel of the second vehicle), a ray is determined that emanates from the image sensor and passes through the vehicle contact point. To determine a location and velocity of the vehicle, the ray is unprojected onto a three-dimensional surface mesh, and an intersection point between the ray and the three-dimensional surface mesh is used as an initial estimate for the projected location of the vehicle contact point in the world.

CN 112 017 236 A relates to a method and device for calculating the position of a target object based on a monocular camera and relates to the technical field of road traffic.

US 2018/260613 A1 relates to a system including a data receiving module configured to receive three-dimensional imaging data and two dimensional imaging data.

US 10 002 442 B1 relates to a system including a camera, a display, one or more memories, and one or more processors communicatively coupled to the one or more memories. The system outputs a guide marker for presentation on the display. The guide marker may be superimposed on an image being captured by the camera and presented on the display. The system determines three-dimensional (3D) coordinates of an intersection point associated with the guide marker.

Interferometric systems are based on an optical measurement scheme. A reflector is placed as a marker on the object. A laser based interferometric measurements system provides a position and angle of the object. In a half sphere measurement volume with a radius of 20m a precision of some 5 micrometers is possible. However, such systems are very expensive.

Camera based systems typically rely on stereoscopic images to determine a position. However, commercially available camera based systems are less accurate and/or have a low measurement speed.

Infrared systems are used in motion capturing applications. Typically, one or more infrared reflectors are used. The precision of such systems is typically in the range of some millimeters.

Magnetic systems are based on the measurement of magnetic fields. Magnetic fields may be produced by permanent magnets or magnetic coils. Based on a known location and/or structure of the magnetic fields, a measurement of the magnetic flux density with a suitable sensor, the position and angle of the object can be determined. A typical system has a resolution of 1.3 centimeters at a distance of 3 meters. However, this requires either one or more coils or one or more sensors to be placed at the object.

Sonic or ultrasonic based systems also require a suitable receiver and/or reflector to be placed at the object. Furthermore, the receiver must not be covered, and the detection range is rather low. Therefore, such localization is not suitable for most applications.

It is therefore an objective of the present invention to provide an improved method and system for determining a three dimensional position. This objective is achieved by the subject-matter of the independent claims, the dependent claims relate to further aspects of the invention.

In an aspect of the invention, there is provided a method for determining a three dimensional, 3D, position of an object as defined in claim 1.

According to an embodiment of the invention, after the object has been recognized, a data base search is performed to identify the object and information about a 3D form of the object is retrieved from the database, wherein the 3D position of the object is further determined based on the retrieved information, and wherein the retrieved information comprises as least one of: a height, a width, a depth, and a shape information of the object.

According to an embodiment of the invention, at least one of the steps c) and d) is based on a computer vision algorithm, and/or wherein at least one of the steps b) and e) to g) is based on an augmented reality, AR, algorithm.

According to an embodiment of the invention, the 3D map is generated based on an AR algorithm and based on the image, and/or wherein the 3D map is pre-calculated and downloaded from a database based on the image.

According to an embodiment of the invention, the at least one further positional information about the object is a height information acquired by a height sensor of the object.

According to an embodiment of the invention, the steps a) to g) are repeated in cycles; wherein a 2D tracking of the object is performed in the images after the object has been recognized for the first time; wherein the step c) and d) are skipped as long the object is tracked in the images; and wherein the 2D position is obtained from the 2D tracking.

According to an embodiment of the invention, the optical sensor is an optical sensor of a smart-device; and wherein the steps of the method are performed on the processing means of the smart device; and/or wherein the processing means of the smart device are configured to communicate with a cloud environment to perform the steps of the method.

According to an embodiment of the invention, the position and orientation of the optical sensor is determined based on a positioning unit of the smart-device.

According to an embodiment of the invention, the computer vision algorithm is one of: YOLO, RetinaNet, SSD, and their derivatives; and/or wherein the augmented reality algorithm is simultaneous localization and mapping, SLAM.

In an aspect of the invention, there is provided a system for determining a three dimensional, 3D, position of an object; wherein the system comprises an optical sensor and the object is located in a field of view of the optical sensor; wherein the system comprises data processing means configured to carry out the method according to any one of the preceding aspects and embodiments.

In an aspect of the invention, there is provided a computer program comprising instructions which, when the program is executed by a computing device connected to an optical sensor, cause the computing device to carry out the method according to any one of the preceding aspects and embodiments.

In an aspect of the invention, there is provided a computer-readable medium comprising instructions which, when executed by a computing device connected to an optical sensor, cause the computing device to carry out the method according to any one of the preceding aspects and embodiments.

It is a general aspect of the invention to use one optical sensor of a smart device to determine a 3D position of an object in the field of view of the optical sensor. This has the advantage that a typical smart device, such as a smart phone, which typically only has one optical sensor, can be used.

Hereinafter 3D positioning of an object is defined as the process of determining a set of coordinates, which describe the three dimensional position of the object in a space. Hereinafter tracking of an object is defined as the repeated 3D positioning over time and the determination of a trajectory in the space. Both problems are closely related. In the following description features of embodiments, which relate to the 3D positioning of an object, are also considered to be features of corresponding embodiments, which relating to 3D tracking of an object and vice versa, unless indicated otherwise or obvious.

In this description the terms "plane" and "2D surface" are used as equivalents. In a simple 3D model all surfaces can be abstracted as planes. However, in practice the surfaces of a 3D model may be more complex. For better intelligibility of the invention, wherever suitable, it is only referred to as a plane. This always includes more complex 2D surfaces.

It is a general aspect of the invention that the method is performed based on a smart device, in particular based on an optical sensor, the processing capabilities, and/or the connectivity function of said smart device. In embodiments of the invention the method is performed on one or more of: a smart phone, a tablet device, or a smart camera.

It is another general aspect of the invention that the system is a distributed system comprising an optical sensor, a computing unit, and preferably a connectivity unit. All of the latter distributed components are suitably operationally connected via a wireless and/or wired connection.

In other words, the system may comprise an integrated camera and computing device like a smart phone or tablet device; a webcam with a separate computing device like a PC; or some remote image sensor that provides image data through some form of telecommunication to a computing device.

It is a general aspect of the invention to perform a two stage positioning process from one image obtained from the image sensor. First, based on the image a 3D model of space in the field of view of the image sensor is obtained, this is also referred to as rendering. For the rendering one or more methods may be used, preferably a method known as simultaneous localization and mapping, SLAM is used.

In the 3D model one or more planes are identified. Second, based on the image, the object is localized on one plane of 3D model. The 3D position can then be calculated based on a position and view direction of the camera and the position of the plane.

The 3D model may be continuously calculated, while images are acquired from the optical sensor. Additionally or alternatively, the method and system may be based on a pre-calculated 3D model, which is preferably accessed and/or downloaded from a database via the connectivity function.

The 3D model may also be referred as a 3D map. The 3D map is preferably calculated based on known augmented reality, AR, algorithms. Additionally or alternatively an existing 3D map may be used. For example, the 3D map may be obtained as a digital model of a building or room or a part of said model. The part of said model may be determined based on an image of the optical sensor.

It is a general aspect of the invention that in an image acquired from the optical sensor an object is recognized and a 2D position of the recognized object is determined, preferably based on a computer vision algorithm.

Based on one or more AR algorithm the 3D map of the space is generated. Furthermore, the relation between the 3D map and the optical sensor is determined.

In other words, the position and direction of view of the sensor within the 3D map is always known or can be directly calculated. Preferably, a positioning unit is used to determine the position of the sensor. More preferably, the positioning unit is integrated together with the optical sensor in one device. Preferably the optical sensor and positioning unit of a smart phone are used.

Based on the position and orientation of the image sensor a line of sight vector L in the 3D map is determined. Finally, the 3D position of the object in the space is calculated in a first calculation. The first calculation is based on the calculation of an intersection point P1 of the line of sight vector L with a 2D surface defined in the 3D map of the space.

Optionally, the result of the first calculation is refined based on a correction parameter calculated from a known 3D geometry of the object. In case the recognized object has been identified, based on a computer vision algorithm, the 3D geometry of the object is retrieved from a database via the connectivity function of the smart device in order to determine the correction parameter.

### Brief description of the drawings

The above-described objects, advantages and features of the present invention, as well as others, will be more readily understood from the following detailed description of certain preferred embodiments of the invention, when considered in conjunction with the accompanying drawings in which:
- Fig. 1: shows a schematic drawing of a positioning system according to an embodiment of the invention;
- Fig. 2a): shows a flow chart of a positioning method according to a first embodiment of the invention;
- Fig. 2b): shows a flow chart of a positioning method according to a second embodiment of the invention;
- Fig. 2c): shows a flow chart of a positioning method according to a third embodiment of the invention;
- Fig. 2d): shows a flow chart of a positioning method according to a fourth embodiment of the invention; and
- Fig. 3: shows an application of the 3D positioning method according to an embodiment of the invention.

### Detailed description of the drawings

In the following, embodiments of the invention will be described. It is noted that some aspects of any one of the described embodiments may also be found in some other embodiments unless otherwise stated or obvious. However, for increased intelligibility, each aspect will only be described in detail when first mentioned and any repeated description of the same aspect will be omitted.

Throughout this description images from an optical sensor are processed. While all used terms used for the processing steps are to be interpreted based on their ordinary meaning, the following terms are used based on the following definitions:
i) One or more objects are recognized. An image from an optical sensor, e.g. a camera of a smart phone is just the image data. Various computer vision algorithms can be used to recognize one or more objects within the image. That is, to determine a 2D position of the object in the image. Preferably, also to determine some basic parameters, such as shape, size and color of said object. As a result of the recognition process in addition to the image also the position of objects in the image is known.
ii) One or more objects are identified. After an object has been recognized the object may be identified. The identification may be based on data stored in a database. The identification is preferably based on a machine learning algorithm, more preferably based on a neural network. After the identification in addition to the image and the position of the object also the type of object is known. Based on the identification additional data, such as known 3D geometry, can be obtained.
iii) One or more objects are localized in a 3D map, i.e. the 3D position is determined. Based on the above described aspects of the invention, the 3D position is determined based on the localization of the object on a plane in the 3D map. That is, a position on the plane is calculated which corresponds to the 2D position of the object in the image. From the position in the plane, the 3D position is determined.

The plane in the 3D map preferably corresponds to a real-world plane in view of the optical sensor, preferably the floor of a room. In this case, the movement of the object is preferably restricted to movement in that plane, i.e. the object is considered non-flying. However, according to the invention, virtual planes, i.e. not corresponding to a plane in the real world, are considered. In this case the movement of a remote controlled object is preferably related to said virtual plane, i.e. in relation to the virtual plane the object is non-flying, however, in relation to a plane of the real world the object may be flying, e.g. in a plane parallel to the floor of a room, e.g. in a virtual plane 1 meter above the floor.

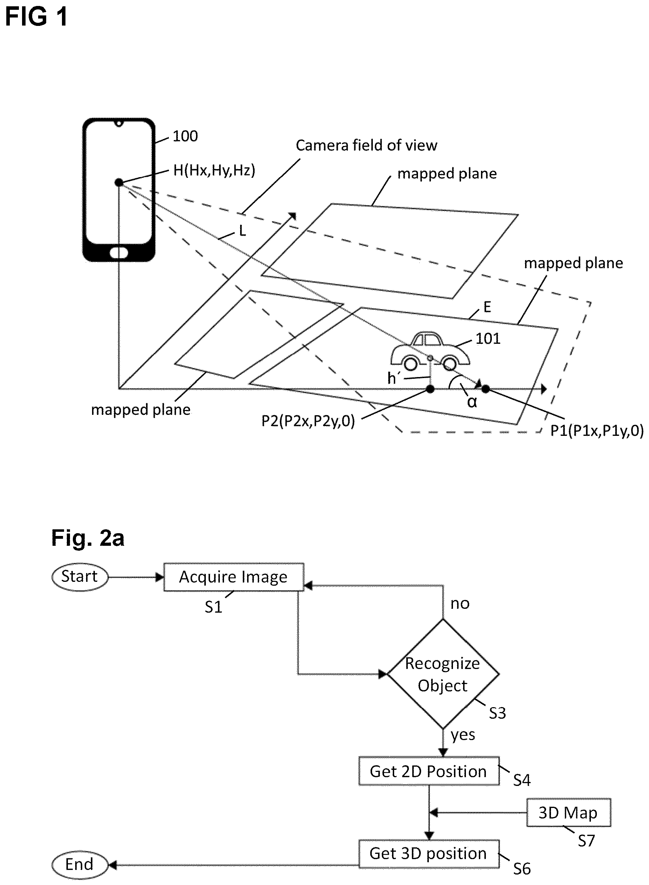

Fig. 1 shows a schematic drawing of a positioning system according to an embodiment of the invention. According to the invention, elements of computer vision and AR algorithms are combined. The 3D positioning according to the invention is based on a 2D positioning of an object 101 in a camera image of a smart device 100, preferably on a live 2D positioning.

The calculation is based on two prerequisites. The first prerequisite is that the object 101 is not flying in the space, i.e. it is found on a surface of the space. In other words, the object is always found on a plane E defined in the space. In other words, one dimension of the position is fixed. As detailed above, a virtual plane is used to fix one coordinate. In a preferred embodiment of the invention, a height sensor of a flying drone is used to fix the height and thus to create a virtual plane. The position in that plane and thus the 3D Position of the drone in the room is determined with the method and system according to the present invention.

The plane E may e.g. be defined by a suitable number of coordinates or vectors. The second prerequisite is that the position H of the camera, i.e. the position of the smart-device 100, is known or at least can be determined directly.

In a preferred embodiment the position of the smart device is determined based on an AR algorithm method, preferably SLAM. To determine a position in SLAM a map of the surroundings is generated and used to track the position of the smart device, i.e. the position of the optical sensor in said map.

The position H is defined by suitable space coordinate. Many coordinate systems are known. For illustrative purposes Cartesian coordinates are assumed. That is, H is given by Hx, Hy, and Hz. Similarly, the plane E is defined in a suitable coordinate system of the space.

In a first step a 3D model of the space in the field of view of the camera is obtained.

In an embodiment of the invention, the 3D map is calculated from a camera image based on an AR algorithm. Additionally or alternatively the 3D map may be pre-calculated and stored in a database. In this case the 3D map is loaded from the database into the smart device 100.

In a preferred embodiment of the invention, SLAM is used to create the 3D map. However, alternative AR methods may be used. For each AR method, in particular for SLAM, different sensors may be used. Optical sensors and LIDAR are preferred sensors.

Regardless of the sensor, a cloud diagram of the surroundings is generated. Based on said cloud diagram planes and other elements of the map are reconstructed. Regardless of the sensor, the 3D map is either generated in real time based on AR and the position in said 3D map is determined therein based on AR or the 3D map is preloaded and only the position in the 3D map is determined based on AR.

In a first calculation of the 3D Position, i.e. P1 (Px, Py, Pz), of the object is based on a line of sight projection of the 2D Position onto said plane E. That is, the position is first calculated by determining in the 3D map a vector L for the line of sight from the camera, i.e. from position H, to the 2D Position of the object in the image.

Due to the first prerequisite the object is assumed to be found at a plane of the space. Due to the second prerequisite the position H is known. Therefore, the position P1 of the object can be determined by calculating the intersection point in the 3D map of the line of sight vector L with the plane E in the space.

In an example useful for understanding the invention, planes are only identified on surfaces of the real world, e.g. the floor or a tabletop. That is, there is only one plane between the optical sensor and the object on which the object is present. Thus, the object is recognized, i.e. visible, when it is determined to be on the first plane, e.g. on the tabletop. Alternatively, the object is not visible, e.g. because it is on the floor under the table, then a 3D position cannot be determined, because the object can also not be recognized in the 2D image.

In an embodiment of the invention, the line of sight vector L is calculated based on camera angles and the 2D position of the object in the image.

The position P1 does not take into account the actual dimensions of the object. In an embodiment of the invention, a second position P2 is calculated based on the dimensions of the object, taking into account that the camera only captures a 2D image, i.e. a 2D projection of the object.

Depending on the geometric complexity of the object, the second calculation can have a high degree of sophistication. After the object has been identified and the 3D geometry of the object is known based on principles of trigonometry the 3D Position of any specific point of the object can be calculated from P1.

In an embodiment of the invention the object is approximated to be a block with a height h, preferably 50cm, a width w, and depth d, each preferably 10cm. The optical sensor is located in a height h1, preferably 1m and in a distance d1 to the object, preferably in 1 m distance. That is, the optical sensor views the object under an angle *α*. The trajectory, i.e. the line of sight vector, according to an embodiment of the invention is determined based on the center of mass or gravity of the object, which is the 2D position of the object in the image. In the described preferred example, this results in an intersection of the line of sight vector with the plane approx. 30cm behind the object. However, since the geometry of the object is known, i.e. h, w, and d are known and also the position of the optical sensor is known, the correct position of the object, i.e. the real center, can be determined based on trigonometry.

In other words the second calculation determines the difference between the center of the 2D projection of the object and the real center of the object in the 3D world / 3D map based on the intersection of the line of sight with said plane and the position of the optical sensor.

For illustrative purposes, the correction is defined by an offset angle *α* and an offset height *h',* which describes the offset of the center of gravity of the object 101 depending on the view angle and the distance of the object to the camera in the 3D map.

In an embodiment of the invention, the above described 3D positioning algorithm is implemented hardware optimized to allow for real time positioning on a smart phone. This also allows for real time tracking of an object in the space.

In an embodiment of the invention, the method comprises an object identification step. Preferably, the object identification step is performed on the smart device 100. Preferably, the object identification is based on a machine learning algorithm, more preferably a neural network. One example of such a neural network is "you only look once", YOLO.

In an embodiment of the invention, the smart device 100 comprises a connectivity function and is thereby connected to a database. The object identification is based on data provided by said database. In a preferred embodiment of the invention, the object identification is based on a picture classification algorithm.

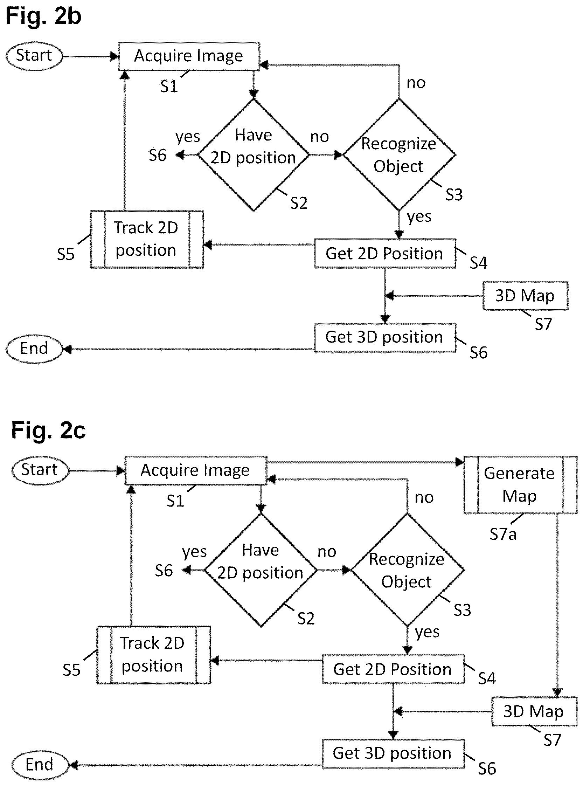

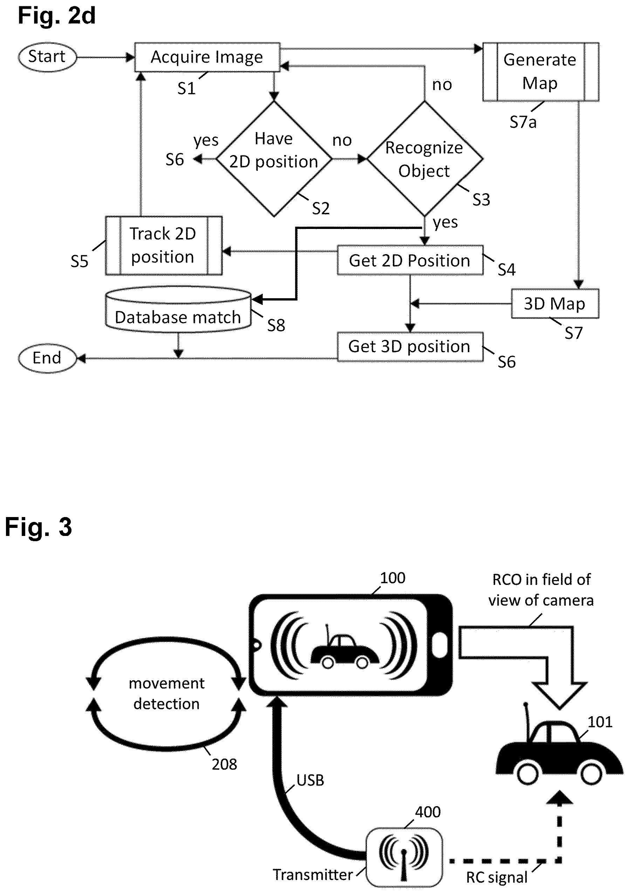

Fig. 2a) shows a flow chart of a positioning method according to a first embodiment of the invention; Fig. 2b) shows a flow chart of a positioning method according to a second embodiment of the invention; Fig. 2c) shows a flow chart of a positioning method according to a third embodiment of the invention; and Fig. 2d) shows a flow chart of a positioning method according to a fourth embodiment of the invention.

In a first embodiment of the invention, as shown in Fig. 2a, a first step S1 an image is acquired from the optical sensor of the smart device. In the image, the object which is to be positioned, is in the field of view of the sensor, i.e. the object is on the image. According to a third step S3 of the invention, one or more objects are recognized in the image. In embodiments of the invention, for recognition of the object in the image, a known computer vision algorithm is used. Examples of such algorithms are YOLO - YOLOv3, or KCF.

YOLO, as described above, refers to "you only look once", which describes that the algorithms allow determining the objects based on only one camera frame. KCF refers to Kernelized Correlation Filter, which is an algorithm for tracking of an object. Both algorithms are preferred for object recognition and tracking. However, similar algorithms also work. Further preferred algorithms for tracking are KCF, MedianFlow, TLD, boosting, MIL and their respective derivatives. Further preferred detection algorithms are YOLO, RetinaNet, SSD and their respective derivatives.

In case no object can be recognized, a next image is acquired, i.e. step S1 is repeated. In case an object has been recognized, it is continued with step S4, i.e. the determination of the 2D position of the object in the image. Preferably, the same computer vision algorithm is used for image recognition in S3 as in the determination of the 2D position in step S4. The 2D position is a 2D coordinate of the object in the image.

In step S7 a 3D map is obtained. In embodiments of the invention, the aforementioned obtaining of a 3D map in step S7 is performed based on one or more AR algorithms. Examples of such algorithms are ARCore, ARKit, or Vuforia. Additionally or alternatively the 3D map is preloaded.

In step S6 of the invention, the 2D position is processed. According to an embodiment of the invention, the 2D position in the image is used to determine a line of sight vector L anchored at the location of the optical sensor and pointing in direction of the 2D position of the object in the image projected onto the 3D Map.

In a preferred embodiment the sight vector L points from the optical sensor to the center of the object. There are different definitions of a center, e.g. center of mass or center of gravity. Each definition is equally suitable for the invention. However, depending on the used computer vision algorithm the concept of "center" is determined by the algorithm. In a preferred embodiment the algorithm provides a rectangle, which is the smallest rectangle comprising the entire object. The "center" of the object is considered to be the center of the rectangle.

Different mathematical methods may be used to define the projection of the 2D image on the 3D map. In a preferred embodiment, for each image also the position and/or orientation of the optical sensor is known and/or determined, and the field of view of the optical sensor in the 3D model can be determined. The line of sight vector is determined based on the center pixel and its projection into the 3D map.

In a preferred embodiment of the invention, the 3D position of the object is calculated as the intersection Point P1 of the vector L with the plane E of the 3D map.

In a second embodiment of the invention, which is shown in Fig. 2b, the 2D Position of the object is tracked. The second embodiment is based on the first embodiment. The descriptions of all steps, which are essentially identical to the steps of the first embodiment, are omitted.

According to a step S2 of the invention, it is determined whether or not the position, i.e. the 2D position in the image, of the object has been determined. In case a 2D position has been determined, it is continued with step S6, i.e. the determination of the 3D position, as described above. In case no 2D position has been determined, it is continued with step S3, i.e. the recognition of one or more objects in the image. In a first iteration of the process in step S2 the answer is usually "no" so that it is always continued with step S3.

In case of a tracking of the object, the changing 2D position of the object is being tracked with a separate computer vision algorithm in step S5. The double frame in S5 indicates an optionally independently running computer vision algorithm. The step S5 uses the current frame and the determined 2D position as well as the next image frame provided by the optical sensor to keep track of the object.

In a third embodiment, which is shown in Fig. 2c, a separate AR algorithm is employed in step S7a to generate a 3D map from the acquired image or images. The third embodiment is based on the first embodiment and/or the second embodiment. The descriptions of all steps, which are essentially identical to the steps of the first and/or second embodiment, are omitted.

In step S7a a 3D map of the field of view is generated based on an AR algorithm. In a preferred embodiment the AR algorithm is operated as an independently running algorithm. Known AR algorithms may be used and/or a pre-calculated 3D map may be used, as described above.

In a fourth embodiment, which is shown in Fig. 2d, a database match is searched in step S8 to improve the processing. The fourth embodiment is based on the first embodiment, the second embodiment, and/or the third embodiment. The descriptions of all steps, which are essentially identical to the steps of the first, second, and/or fourth embodiment, are omitted.

In a preferred embodiment of the invention, in case an object has been recognized in the image, a match for the recognized object is searched in a database in step S8. In case no match is found, a next image is acquired until a match of a recognized object with a database entry is found.

Since most objects are not 2-dimensional objects, in step S8 the 3-dimensional object geometry is reintroduced into the calculation from the database to calculate the true location of points of the object more accurately. The correction is described above.

In a preferred embodiment, which is compatible with all four described embodiments, the above described process repeats for each image frame provided by the optical sensor. Optionally steps S3 and S4 are skipped if the object remained within the optical sensor range, i.e. the object remained "in frame", or steps S3 and S4 are triggered if the object was not in range of the optical sensor in the previous frame. In other words, if due to the tracking the 2D position could be tracked the object need not be recognized again. In case the object is new or reentering the field of view, the object needs to be recognized again.

According to the invention an interaction between real objects and AR content is possible. This interaction is of interest for many applications in different industries, for example in tracking humans or machines.

In an embodiment of the invention, a universal remote control method for a remote controlled object and the 3D positioning method are combined. The universal remote control method for a remote controlled object is described in detail in the patent publication EP4016492A1 entitled "System and Method for Remote Controlled Objects"

The system comprises a smart device with a camera and a second controller. The second controller is connected to the smart device via a standardized interface. The second controller is configured to send remote control signals to a remote controlled object. In a preferred embodiment the second controller is provided in a dongle-type device, which is configured to be attached to a port of the smart device and further configured to send remote control signals to a remote controlled object.

In an initialization phase, the camera of the smart device is used to identify the remote controlled object via a computer vision algorithm. Preferably, the smart device is connected to a database and the computer vision algorithm is a machine learning algorithm which utilizes data from the database to identify the remote controlled object.

In case the remote controlled object is identified, corresponding remote control information is received from the database and the remote control commands, comprised in the remote control information, are verified via the 3D positioning method.

That is, a remote control command is send from the smart device to the second controller. The second controller generates the corresponding remote control signals and sends the remote control signals to the remote controlled object. Alternatively, the remote control signals are already generated at the smart device and the second controller only receives the remote control signals from the smart device via the standardized interface and transmits the signals to the remote controlled object.

To verify the remote control command the camera of the smart device is used to detect a movement, i.e. to detect a change of position of the remote controlled object. In other words, the camera of the smart device is used as action verification means.

Subsequently a plurality of images is acquired from the camera. Based on the images and based on augmented reality algorithms a 3D map of the space in the image is calculated and one or more planes are identified in the 3D map. The 3D position of the camera within the 3D map is determined based on a positioning unit of the smart device. Additionally or alternatively, a pre-calculated 3D map from a database may be used. Additionally or alternatively the 3D position of the camera within the 3D map is calculated based on the images.

Furthermore, based on the images and computer vision algorithms, a plurality of 2D positions of the remote controlled object in the images is determined. Based on each of the 2D positions a corresponding 3D position is calculated.

The respective 3D position is determined as follows: a vector is calculated in the 3D map originating at the position of the camera and pointing towards to the projection of the 2D position of the remote controlled object on a plane in the 3D map. The 3D position is calculated from determining the intersection of said vector with said plane in the 3D map. For each 2D position a 3D position is calculated.

The plurality of 3D positions defines a trajectory of the remote controlled object. The trajectory indicates a movement of the remote controlled object. The movement is used to verify the remote control command.

In case the remote controlled object can not be identified, a heuristic search for remote control commands is performed. The same camera based movement verification method is used to identify a movement of the remote controlled object.

In an operational phase, the user inputs drive commands to the smart device. The smart device preferably sends said drive commands to the second controller, preferably based on a predetermined format. The second controller generates the corresponding remote control signals based on the user's drive commands.

Fig. 3 shows a method and system according to an embodiment of the invention. In this embodiment a smart device 100 with an integrated camera is used. The RCO 101 is identified based on a camera input. A second controller 400, without an action verification means, is connected to the smart device 100. Preferably, the second controller 400 is connected to the smart device 100 via a physical interface, i.e. a plug-in or wired connection, more preferably via a USB or Lightning interface.

As described above the second controller 400 is configured to send remote control signals to the RCO 101. The RCO is within the field of view of the camera of the smart device 100. The smart device 100 is configured to detect the movement 208 of the RCO 101 based on a 3D positioning method as described above.

What has been described and illustrated herein are embodiments of the invention along with some of variations. The terms, descriptions and figures used herein are set forth by way of illustration only and are not meant as limitations.

## Claims

1. A computer-implemented method for determining a three dimensional, 3D, position of an object (101);
wherein the object is located in a field of view of an optical sensor;
wherein the object is located on a plane (E);
the method comprising the steps of:
a) acquiring (S1) an image from the optical sensor comprising the object;
b) obtaining the 3D position of the optical sensor in a 3D map comprising at least a portion of the field of view of the optical sensor;
c) recognizing (S3) the object in the image;
d) determining (S4) a 2D position of the object in the image;
e) determining the plane in the 3D map;
f) determining, in the 3D map, at least one line of sight vector from the 3D position of the optical sensor to the object based on the projection of the 2D position of the object in the 3D map,
g) determining (S6) the 3D position of the object based on the intersection of the at least one line of sight vector with the plane,
the method being **characterized in that** the plane is a virtual plane determined by at least one further positional information about the object.

2. Method according to claim 1, wherein the at least one further positional information about the object is a height information acquired by a height sensor of the object

3. Method according to claim 1 or 2,
wherein after the object has been recognized, a data base search is performed to identify the object and information about a 3D form of the object is retrieved from the database,
wherein the 3D position of the object is further determined based on the retrieved information, and
wherein the retrieved information comprises as least one of: a height, a width, a depth, and a shape information of the object.

4. Method according to any one of claims 1 to 3,
wherein at least one of the steps c) and d) is based on a computer vision algorithm, and/or
wherein at least one of the steps b) and e) to g) is based on an augmented reality, AR, algorithm.

5. Method according to any one of claims 1 to 4,
wherein the 3D map is generated based on an AR algorithm and based on the image, and/or
wherein the 3D map is pre-calculated and downloaded from a database based on the image.

6. Method according to any one of claims 1 to 5,
wherein the steps a) to g) are repeated in cycles;
wherein a 2D tracking of the object is performed in the images after the object has been recognized for the first time;
wherein the step c) and d) are skipped as long the object is tracked in the images; and
wherein the 2D position is obtained from the 2D tracking.

7. Method according to any one of claims 1 to 6,
wherein the optical sensor is an optical sensor of a smart-device (100);
and
wherein the steps of the method are performed on the processing means of the smart device; and/or
wherein the processing means of the smart device are configured to communicate with a cloud environment to perform the steps of the method.

8. Method according to claim 7, wherein the position and orientation of the optical sensor is determined based on a positioning unit of the smart-device.

9. Method according to any one of claims 4 to 8, as far as dependent on claim 4,
wherein the computer vision algorithm is one of: YOLO, RetinaNet, SSD, and their derivatives; and/or
wherein the augmented reality algorithm is simultaneous localization and mapping, SLAM.

10. A system for determining a three dimensional, 3D, position of an object;
wherein the system comprises an optical sensor and the object is located in a field of view of the optical sensor;
wherein the system comprises data processing means configured to carry out the method according to any one of claims 1 to 9.

11. A computer program comprising instructions which, when the program is executed by a computing device connected to an optical sensor, cause the computing device to carry out the method according to any one of claims 1 to 9.

12. A computer-readable medium comprising instructions which, when executed by a computing device connected to an optical sensor, cause the computing device to carry out the method according to any one of claims 1 to 9.

## Patentansprüche

1. Computerimplementiertes Verfahren zum Bestimmen einer dreidimensionalen, 3D-, Position eines Objekts (101);
wobei sich das Objekt in einem Sichtfeld eines optischen Sensors befindet;
wobei sich das Objekt auf einer Ebene (E) befindet;
wobei das Verfahren die folgenden Schritte aufweist:
a) Erfassen (S1) eines Bildes von dem optischen Sensor, aufweisend das Objekt;
b) Erhalten der 3D-Position des optischen Sensors in einer 3D-Karte, aufweisend mindestens einen Abschnitt des Sichtfelds des optischen Sensors;
c) Erkennen (S3) des Objekts in dem Bild;
d) Bestimmen (S4) einer 2D-Position des Objekts in dem Bild;
e) Bestimmen der Ebene in der 3D-Karte;
f) Bestimmen, in der 3D-Karte, mindestens eines Sichtlinienvektors von der 3D-Position des optischen Sensors zu dem Objekt, anhand der Projektion der 2D-Position des Objekts in der 3D-Karte,
g) Bestimmen (S6) der 3D-Position des Objekts anhand des Schnittpunkts des mindestens einen Sichtlinienvektors mit der Ebene,
wobei das Verfahren **dadurch gekennzeichnet ist, dass** die Ebene eine virtuelle Ebene ist, die durch mindestens eine weitere Positionsinformation über das Objekt bestimmt wird.

2. Verfahren nach Anspruch 1, wobei die mindestens eine weitere Positionsinformation über das Objekt eine Höheninformation ist, die von einem Höhensensor des Objekts erfasst wird.

3. Verfahren nach Anspruch 1 oder 2,
wobei nach dem Erkennen des Objekts eine Datenbanksuche durchgeführt wird, um das Objekt zu identifizieren, und Informationen über eine 3D-Form des Objekts aus der Datenbank abgerufen werden,
wobei die 3D-Position des Objekts ferner anhand der abgerufenen Informationen bestimmt wird, und
wobei die abgerufenen Informationen mindestens eine der folgenden aufweist: eine Höhe, eine Breite, eine Tiefe und eine Forminformation des Objekts.

4. Verfahren nach einem der Ansprüche 1 bis 3,
wobei mindestens einer der Schritte c) und d) auf einem Computer-Vision-Algorithmus basiert, und/oder
wobei mindestens einer der Schritte b) und e) bis g) auf einem Augmented-Reality-, AR-, Algorithmus basiert.

5. Verfahren nach einem der Ansprüche 1 bis 4,
wobei die 3D-Karte anhand eines AR-Algorithmus und anhand des Bildes erzeugt wird, und/oder
wobei die 3D-Karte anhand des Bildes vorberechnet und aus einer Datenbank heruntergeladen wird.

6. Verfahren nach einem der Ansprüche 1 bis 5,
wobei die Schritte a) bis g) in Zyklen wiederholt werden;
wobei ein 2D-Verfolgung des Objekts in den Bildern durchgeführt wird, nachdem das Objekt zum ersten Mal erkannt worden ist;
wobei die Schritte c) und d) übersprungen werden, solange das Objekt auf den Bildern verfolgt wird;
wobei die 2D-Position aus der 2D-Verfolgung erhalten wird.

7. Verfahren nach einem der Ansprüche 1 bis 6,
wobei der optische Sensor ein optischer Sensor einer intelligenten Vorrichtung (100) ist; und
wobei die Schritte des Verfahrens auf den Verarbeitungsmitteln der intelligenten Vorrichtung durchgeführt werden; und/oder
wobei die Verarbeitungsmittel der intelligenten Vorrichtung so konfiguriert sind, dass sie mit einer Cloud-Umgebung kommunizieren, um die Schritte des Verfahrens durchzuführen.

8. Verfahren nach Anspruch 7, wobei die Position und Ausrichtung des optischen Sensors anhand einer Positioniereinheit der intelligenten Vorrichtung bestimmt wird.

9. Verfahren nach einem der Ansprüche 4 bis 8, soweit abhängig von Anspruch 4,
wobei der Computer-Vision-Algorithmus einer der folgenden ist: YOLO, RetinaNet, SSD und dessen Derivate; und/oder
wobei der Augmented-Reality-Algorithmus die gleichzeitige Lokalisierung und Kartierung, SLAM, ist.

10. System zum Bestimmen einer dreidimensionalen, 3D-, Position eines Objekts;
wobei das System einen optischen Sensor aufweist und sich das Objekt in einem Sichtfeld des optischen Sensors befindet;
wobei das System Datenverarbeitungsmittel aufweist, die so konfiguriert sind, dass sie das Verfahren nach einem der Ansprüche 1 bis 9 ausführen.

11. Computerprogramm, aufweisend Befehle, die, wenn das Programm durch eine mit einem optischen Sensor verbundene Computervorrichtung ausgeführt wird, die Computervorrichtung veranlassen, das Verfahren nach einem der Ansprüche 1 bis 9 auszuführen.

12. Computerlesbares Medium, aufweisend Befehle, die, wenn sie durch eine mit einem optischen Sensor verbundene Computervorrichtung ausgeführt werden, die Computervorrichtung veranlassen, das Verfahren nach einem der Ansprüche 1 bis 9 auszuführen.

## Revendications

1. Procédé mis en œuvre par ordinateur pour déterminer une position tridimensionnelle, 3D, d'un objet (101) ;
dans lequel l'objet est situé dans un champ de vision d'un capteur optique ;
dans lequel l'objet est situé sur un plan (E) ;
le procédé comprenant les étapes suivantes :
a) l'acquisition (S1) d'une image à partir du capteur optique comprenant l'objet ;
b) l'obtention de la position 3D du capteur optique dans une carte 3D comprenant au moins une partie du champ de vision du capteur optique ;
c) la reconnaissance (S3) de l'objet dans l'image ;
d) la détermination (S4) d'une position 2D de l'objet dans l'image ;
e) la détermination du plan dans la carte 3D ;
f) la détermination, dans la carte 3D, d'au moins un vecteur de ligne de visée de la position 3D du capteur optique à l'objet basé sur la projection de la position 2D de l'objet dans la carte 3D,
g) la détermination (S6) de la position 3D de l'objet sur la base de l'intersection de l'au moins un vecteur de ligne de visée avec le plan,
le procédé étant **caractérisé en ce que** le plan est un plan virtuel déterminé par au moins une information de position supplémentaire concernant l'objet.

2. Procédé selon la revendication 1, dans lequel l'au moins une information de position supplémentaire concernant l'objet est une information de hauteur acquise par un capteur de hauteur de l'objet.

3. Procédé selon la revendication 1 ou 2,
dans lequel après que l'objet a été reconnu, une recherche de base de données est réalisée pour identifier l'objet et des informations concernant une forme 3D de l'objet sont récupérées à partir de la base de données,
dans lequel la position 3D de l'objet est en outre déterminée sur la base des informations récupérées, et
dans lequel les informations récupérées comprennent une information de hauteur et/ou de largeur et/ou de profondeur et/ou de forme de l'objet.

4. Procédé selon l'une quelconque des revendications 1 à 3,
dans lequel au moins l'une des étapes c) et d) est basée sur un algorithme de vision par ordinateur, et/ou
dans lequel au moins l'une des étapes b) et e) à g) est basée sur un algorithme de réalité augmentée, RA.

5. Procédé selon l'une quelconque des revendications 1 à 4,
dans lequel la carte 3D est générée sur la base d'un algorithme de RA et basée sur l'image, et/ou
dans lequel la carte 3D est précalculée et téléchargée à partir d'une base de données basée sur l'image.

6. Procédé selon l'une quelconque des revendications 1 à 5,
dans lequel les étapes a) à g) sont répétées en cycles ;
dans lequel un suivi en 2D de l'objet est réalisé dans les images après que l'objet a été reconnu pour la première fois ;
dans lequel les étapes c) et d) sont sautées tant que l'objet est suivi dans les images ; et
dans lequel la position en 2D est obtenue à partir du suivi en 2D.

7. Procédé selon l'une quelconque des revendications 1 à 6,
dans lequel le capteur optique est un capteur optique d'un dispositif intelligent (100) ; et
dans lequel les étapes du procédé sont réalisées sur les moyens de traitement du dispositif intelligent ; et/ou
dans lequel les moyens de traitement du dispositif intelligent sont configurés pour communiquer avec un environnement en nuage pour réaliser les étapes du procédé.

8. Procédé selon la revendication 7, dans lequel la position et l'orientation du capteur optique sont déterminées sur la base d'une unité de positionnement du dispositif intelligent.

9. Procédé selon l'une quelconque des revendications 4 à 8, qui dépendent de la revendication 4,
dans lequel l'algorithme de vision par ordinateur est l'un de : YOLO, RetinaNet, SSD, et leurs dérivés ; et/ou
dans lequel l'algorithme de réalité augmentée est une localisation et cartographie simultanées, SLAM.

10. Système de détermination d'une position tridimensionnelle, 3D, d'un objet ;
dans lequel le système comprend un capteur optique et l'objet est situé dans un champ de vision du capteur optique ;
dans lequel le système comprend des moyens de traitement de données configurés pour mettre en œuvre le procédé selon l'une quelconque des revendications 1 à 9.

11. Programme informatique comprenant des instructions qui, lorsque le programme est exécuté par un dispositif informatique connecté à un capteur optique, amènent le dispositif informatique à mettre en œuvre le procédé selon l'une quelconque des revendications 1 à 9.

12. Support lisible par ordinateur comprenant des instructions qui, lorsqu'elles sont exécutées par un dispositif informatique connecté à un capteur optique, amènent le dispositif informatique à mettre en œuvre le procédé selon l'une quelconque des revendications 1 à 9.
